# EUROPÄISCHE PATENTANMELDUNG

(11) **EP 3 476 668 A1**
(43) Veröffentlichungstag der Anmeldung: **01.05.2019**
(21) Anmeldenummer: 18000743.7
(22) Anmeldetag: 19.09.2018
(51) Int. Cl.: B60R 21/233, B60R 21/237, B60R 21/239

(54) **INSASSEN-RÜCKHALTESYSTEM MIT EINEM VON EINEM TREIBLADUNGSSATZ AUFBLASBAREN PRALLKISSEN, PRALLKISSEN EINES SOLCHEN RÜCKHALTESYSTEMS UND VERFAHREN ZU DESSEN AUFBLASEN**

(30) Priorität: 24.10.2017 DE 102017009867
(71) Anmelder: Fraunhofer-Gesellschaft zur Förderung der angewandten Forschung e.V., 80686 München (DE)
(72) Erfinder: Schmid, Helmut, 72250 Freudenstadt (DE); Eckl, Wilhelm, 76227 Karlsruhe (DE); Scholz, Peter, 76327 Pfinztal (DE)
(74) Vertreter: Lichti - Patentanwälte Partnerschaft mbB

(57) **Zusammenfassung**

Es wird ein Insassen-Rückhaltesystem für Fahr- oder Flugzeuge vorgeschlagen, welches einen Gasgenerator (1) mit einem in einem Gasgeneratorgehäuse (2) angeordneten Treibladungssatz und ein mit einer Auslassöffnung (5) des Gasgeneratorgehäuses (2) in Verbindung stehendes Prallkissen (4), wie einen sogenannten Airbag, umfasst. Das Prallkissen (4) weist eine erste Kammer (6a) und wenigstens eine zweite Kammer (6b) auf, wobei die erste Kammer (6a) mit der zweiten Kammer (6b) in Verbindung steht und nur die erste Kammer (6a) mit der Auslassöffnung (5) des Gasgenerators in Verbindung steht. Die Erfindung sieht vor, dass sowohl die erste Kammer (6a) als auch die wenigstens eine zweite Kammer (6b) des Prallkissens (4) gegenüber der Umgebung im Wesentlichen gasdicht ausgestaltet sind.

## Beschreibung

Die Erfindung betrifft ein Insassen-Rückhaltesystem, umfassend einen Gasgenerator mit einem in einem Gasgeneratorgehäuse angeordneten Treibladungssatz und ein mit wenigstens einer Auslassöffnung des Gasgeneratorgehäuses in Verbindung stehendes Prallkissen, wobei das Prallkissen eine erste Kammer und wenigstens eine zweite Kammer aufweist, wobei die erste Kammer mit der zweiten Kammer in Verbindung steht und nur die erste Kammer des Prallkissens mit der wenigstens einen Auslassöffnung des Gasgeneratorgehäuses in Verbindung steht. Die Erfindung bezieht sich ferner auf ein Prallkissen für ein Insassen-Rückhaltesystem, welches einen Gasgenerator mit einem in einem Gasgeneratorgehäuse angeordneten Treibladungssatz umfasst, wobei das Prallkissen zur Anordnung an dem Gasgeneratorgehäuse derart ausgebildet ist, dass es mit wenigstens einer Auslassöffnung des Gasgeneratorgehäuses in Verbindung steht, wobei das Prallkissen eine erste Kammer und wenigstens eine zweite Kammer aufweist, wobei die erste Kammer mit der zweiten Kammer in Verbindung steht und nur die erste Kammer des Prallkissens mit der wenigstens einen Auslassöffnung des Gasgeneratorgehäuses in Verbindung steht. Darüber hinaus bezieht sich die Erfindung auf ein Verfahren zum Aufblasen eines Prallkissens eines Insassen-Rückhaltesystems mit einem Gasgenerator mit einem in einem Gasgeneratorgehäuse angeordneten Treibladungssatz, indem der Treibladungssatz gezündet und das dadurch erzeugte Treibgas über wenigstens eine Auslassöffnung des Gasgeneratorgehäuses in das Prallkissen überführt wird, um das Prallkissen zu expandieren, wobei das Treibgas zunächst nur in eine erste Kammer des Prallkissens überführt wird, wonach es aus der ersten Kammer in wenigstens eine hiermit in Verbindung stehende zweite Kammer des Prallkissens überführt wird.

Insassen-Rückhaltesysteme mit einem Prallkissen, welches durch Sensor-initiiertes Zünden des Treibladungssatzes eines Gasgenerators aufgeblasen wird, finden seit vielen Jahren in Kraftfahrzeugen und Flugzeugen verbreiteten Einsatz. Das üblicherweise auch als "Airbag" bezeichnete Prallkissen ist dabei in der Regel aus einem Sack aus Kunststoffmaterial, wie beispielsweise aus mit Silikon beschichtetem Polyamid, Polyester oder dergleichen, gefertigt und wird anlässlich eines Unfalls innerhalb von etwa 10 bis 100 Millisekunden mit Treibgas befüllt, was durch Zünden des Treibladungssatzes des Gasgenerators geschieht, um zu verhindern, dass der Insasse gegen harte und/oder scharfkantige Komponenten der Fahr- bzw. Flugzeugkabine prallt. Ist der Treibladungssatz gezündet worden, so treten die bei dessen Abbrand erzeugten Treibgase einschließlich etwaiger Partikel über die Auslassöffnung(en) des Gasgeneratorgehäuses in das Prallkissen ein, wodurch dieses expandiert bzw. aufgeblasen wird. Um größere Partikel, welche das Prallkissen beschädigen könnten, zurückzuhalten, ist ferner der Einsatz von Filtern bekannt.

Die Zündung des Treibladungssatzes erfolgt ausschließlich bei starken negativen Beschleunigungen und/oder bei starken einwirkenden mechanischen Belastungen jenseits von solchen, wie sie bei der üblichen Fahrt einschließlich Vollbremsungen erreicht werden. Zu diesem Zweck steht ein Zünder des Treibladungssatzes in der Regel mit einem Steuergerät in Wirkverbindung, welches seinerseits mit einem oder mehreren Sensoren, wie z.B. Druck- und/oder insbesondere Beschleunigungssensoren, verbunden ist und den Zünder auslöst, sobald ein Sensor eine derartige Beschleunigung erfasst hat. Die aus dem Gasgenerator mit dem in seinem Gasgeneratorgehäuse untergebrachten Treibladungssatz und dem hiermit in Verbindung stehenden Prallkissen gebildete Einheit wird dabei häufig als "Airbag-Modul" bezeichnet. Die auch als "Crashsensoren" bezeichneten Sensoren können in das Steuergerät integriert und/oder an verschiedenen Stellen in dem Fahr- bzw. Flugzeug verteilt angeordnet sein.

Während gattungsgemäße Insassen-Rückhaltesysteme auf der Basis von aufblasbaren Prallkissen das Verletzungsrisiko der Insassen bei Unfällen grundsätzlich erheblich zu verringern vermögen, erweisen sie sich gleichwohl nach wie vor in mehrerlei Hinsicht als verbesserungsbedürftig.

So kann es beispielsweise im Falle sogenannter "Out-of-Position"-Situationen der Fahr- oder Flugzeuginsassen zu schwerwiegenden bis hin zu tödlichen Verletzungen während des Aufblasen des Prallkissens kommen, wenn letzteres auf die Insassen auftrifft, welche sich während der Expansion des Prallkissens in dessen Entfaltungsbereich befinden. Ein solcher Aufprall der Insassen auf das expandierende Prallkissen, welcher auch als "Punching" bezeichnet wird, kann vornehmlich bei kleinen Personen bzw. Kindern geschehen, welche sich (zu) nahe an demjenigen Fahrzeugbereich aufhalten, in welchem das Airbag-Modul positioniert ist. Darüber hinaus bergen insbesondere relativ große Gasgeneratoren die Gefahr einer Schädigung des Trommelfells, weil der Abbrand des Treibladungssatzes mit einem lauten "Knall" einhergeht, welcher um so stärker ausgeprägt ist, je größer die Treibladung ist. Den vorgenannten Gefahren versucht man gegenwärtig dadurch zu begegnen, dass zweistufige Gasgeneratoren eingesetzt werden, deren erste Stufe zumeist mehr als die Hälfte der gesamten Treibladung und deren zweite Stufe weniger als die Hälfte der gesamten Treibladung umfasst. Werden die beiden Stufen mit zeitlichem Versatz gezündet, so lässt sich der erzeugte Gasdruck zeitlich staffeln und lassen sich folglich die Druckspitzen insgesamt verringern, doch bietet diese Maßnahme allein gleichwohl keinen zuverlässigen Schutz gegen die obigen Verletzungsrisiken.

Ein weiterer Nachteil bekannter Prallkissen von Airbag-Modulen besteht darin, dass die auf das expandierte Prallkissen auftreffenden Personen an der Oberfläche des Prallkissens entlang von diesem abgleiten und auf benachbarten, harten Innenteile auftreffen, so dass das Prallkissen seine ihm zugedachte Funktion nur bedingt zu erfüllen vermag. Für die Prallkissen in ihrem expandierten Zustand finden gegenwärtig verschiedene Sackformen Verwendung, welche beispielsweise im Wesentlichen rund, etwa rechteckig oder quadratisch oder auch länglich ausgestaltet sein können, je nachdem, wo ein Aufprall empfindlicher Körperteile der Insassen bei einem Unfall zu erwarten ist. Derartige Formgebungen werden vornehmlich durch an dem Prallkissen angebrachte Haltenähte oder -bänder erzeugt, doch lässt sich auf diese Weise lediglich die räumliche Erstreckung des expandierten Prallkissens einstellen, wohingegen ein Abgleiten der Insassen an dem expandierten Prallkissen in ungünstigen Positionen und/oder Unfallszenarien nicht verhindert werden kann.

Darüber hinaus sind in jüngerer Zeit Insassen-Rückhaltesysteme gemäß dem Oberbegriff des Anspruchs 1 bekannt, welche ein in mehrere Kammern unterteiltes Prallkissen umfassen, wobei nur eine erste Kammer mit einer Auslassöffnung des Gasgenerators in Verbindung steht, während die zweite Kammer mit der ersten Kammer in Verbindung steht, so dass die Kammern sukzessive aufgeblasen werden und dem Prallkissen insgesamt komplexere, gegen das vorerwähnte Abgleiten der Passagiere sicherere Formen verliehen werden können. So beschreibt beispielsweise die US 7 458 607 B2 ein Insassen-Rückhaltesystem sowie ein hierfür vorgesehenes Prallkissen mit einem Gasgenerator, welcher ein Gasgeneratorgehäuse mit einem hierin angeordneten Treibladungssatz umfasst. Eine Auslassöffnung des Gasgenerators steht mit einer ersten Kammer eines Prallkissens in Verbindung, welche über eine Mehrzahl an Durchlassöffnungen mit einer zweiten Kammer kommuniziert. Die zweite Kammer des Prallkissens ist mit einer Entgasungsöffnung versehen, so dass das Treibgas, nachdem das Prallkissen seine ihm zugedachte Funktion erfüllt hat, in die Umgebung entweichen kann. Weitere Insassen-Rückhaltesysteme, welche mit mehreren Kammern ausgestattete Prallkissen aufweisen, sind z.B. aus den DE 38 33 888 A1, US 5 253 892 A, DE 603 10 871 T2, US 6 086 092 A, US 3 752 501 A, US 2017/0088080 A1 und DE 42 39 035 A1 bekannt.

Ein weiteres Problem von Airbag-Modulen gemäß dem Stand der Technik besteht insbesondere darin, dass die beim Abbrand des Treibladungssatzes entstehenden Treibgase, welche neben verschiedenen (Fein)partikeln insbesondere toxische Komponenten enthalten können, nach dem Aufblasen des Prallkissens in den Innenraum des Fahr- bzw. Flugzeugs abgegeben werden, um dem Prallkissen ein hohes Stoßabsorptionsvermögen zu verleihen und die Insassen auf diese Weise "weich" abzufedern. Dies geschieht üblicherweise dadurch, dass das Prallkissen mit einem oder mehreren, seinen Innenraum mit der Umgebung verbindenden Überdruckventilen ausgestattet ist, welche in der Regel an einem dem Insassen abgewandten Bereich des expandierten Prallkissens angeordnet sind und z.B. nach Art von etwa kreisförmigen Sollbruchlinien gebildet sein können, welche bei einem vorherbestimmten Druck im Innern des Prallkissens öffnen, so dass das Treibgas einschließlich etwaiger Partikel in die Personenkabine entweicht. Die teils toxischen Komponenten der Treibgase sowie die hierin enthalten Feinstäube bergen folglich einerseits ein gesundheitliches Gefährdungspotenzial für die Insassen, andererseits muss die von dem Treibladungssatz erzeugte Menge an Treibgas stets (deutlich) größer sein als das Aufnahmevolumen des Prallkissens, welches in der Praxis beispielsweise in der Größenordnung von etwa 60 1 liegen kann, was wiederum in der Notwendigkeit relativ großer Gasgeneratoren mit der damit verbundenen, weiter oben erwähnten Gefahr von Hörschäden resultiert und zudem aufgrund des erforderlichen Bauraumes die gestalterische Freiheit des Fahrzeuginnenraums einschränken kann.

Der Erfindung liegt daher die Aufgabe zugrunde, ein Insassen-Rückhaltesystem der eingangs genannten Art sowie das Prallkissen eines solchen Insassen-Rückhaltesystems unter möglichst weitgehender Vermeidung der vorgenannten Nachteile auf einfache und kostengünstige Weise dahingehend weiterzubilden, dass die Sicherheit der Insassen gegenüber dem Stand der Technik verbessert wird. Sie ist ferner auf ein Verfahren zum Aufblasen des Prallkissens eines solchen Insassen-Rückhaltesystems mit einem in einem Gasgeneratorgehäuse angeordneten Treibladungssatz gerichtet.

In vorrichtungstechnischer Hinsicht wird diese Aufgabe erfindungsgemäß bei einem Insassen-Rückhaltesystem der eingangs genannten Art sowie bei einem Prallkissen eines solchen Insassen-Rückhaltesystems dadurch gelöst, dass sowohl die erste Kammer als auch die wenigstens eine zweite Kammer des Prallkissens gegenüber der Umgebung im Wesentlichen gasdicht ausgestaltet sind.

In verfahrenstechnischer Hinsicht sieht die Erfindung zur Lösung dieser Aufgabe bei einem Verfahren zum Aufblasen eines Prallkissens eines Insassen-Rückhaltesystems der eingangs genannten Art ferner vor, dass das Treibgas im Innern des Prallkissens zurückgehalten wird.

Durch die erfindungsgemäße Ausgestaltung des Prallkissens mit wenigstens zwei miteinander in Verbindung stehenden Kammern lässt sich einerseits die oben erwähnte Gefahr eines Abgleitens der Insassen entlang der Oberfläche des Prallkissens wirksam vermindern, da die Treibgase in dem expandierten Prallkissen beim Aufprall einer Person von der ersten Kammer in die zweite Kammer verdrängt werden können, wodurch die erste Kammer zumindest etwas kollabiert und die zweite Kammer insbesondere zumindest etwas expandiert wird und die Gesamtgeometrie des Prallkissens folglich derart verändert werden kann, dass beim Entlanggleiten eines Insassen entlang der ersten Kammer dieser von der wenigstens einen zweiten Kammer zurückgehalten werden kann, ohne Gefahr zu laufen, gänzlich ans dem Prallkissen vorbei auf benachbarten Innenverkleidungsteile zu stoßen. Darüber hinaus lässt sich aufgrund der miteinander in Verbindung stehenden Kammern des Prallkissens, von dessen ersten Kammer die Treibgase in dessen wenigstens eine zweite Kammer verdrängt werden können, die Verletzungsgefahr in den oben angesprochenen "Out-of-Position"-Situationen deutlich verringern, weil ein die Treibgase aus der ersten Kammer in die wenigstens eine zweite Kammer verdrängt werden können, wenn eine Person während des Aufblasens des Prallkissens von der expandierenden ersten Kammer getroffen wird. Um für das sequenzielle Aufblasen der ersten und der wenigstens einen zweiten Kammer zu sorgen, steht dabei nur die erste Kammer des Prallkissens mit der wenigstens einen Auslassöffnung des Gasgeneratorgehäuses in Verbindung steht, so dass beim Zünden des Treibladungssatzes zunächst nur die erste Kammer mit dem Treibgas befüllt und (nur) die erste Kammer spontan ihre Wirkung zu entfalten vermag.

Die miteinander kommunizierenden Kammern des Prallkissens, von dessen erster, mit der wenigstens einen Auslassöffnung des Gasgenerators in Verbindung stehender Kammer das von dem Treibladungssatz erzeugte Treibgas in die wenigstens eine zweite Kammer entweichen kann, machen es erfindungsgemäß möglich, dass sowohl die erste Kammer als auch die wenigstens eine zweite Kammer des Prallkissens gegenüber der Umgebung im Wesentlichen gasdicht ausgestaltet sind, so dass die oft toxischen und mit Feinpartikeln versetzten Treibgase in dem Prallkissen zurückgehalten werden und nicht in den Innenraum des Fahr- oder Flugzeugs entweichen können, aber gleichwohl der Aufprall eines Passagiers auf das Prallkissen wirksam abgedämpft werden kann. Wie weiter unten noch näher erläutert, sollte dabei der Treibladungssatz bzw. das beim Abbrand desselben erzeugte Gasvolumen freilich an das Aufnahmevolumen der Kammern des Prallkissens angepasst sein. Da im Gegensatz zum Stand der Technik, bei welchem aufgrund des Abführens der Treibgase in den Fahrzeuginnenraum der Treibladungssatz des Gasgenerators überdimensioniert sein muss, um über den erforderlichen Zeitraum die Wirkung des Prallkissens aufrechtzuerhalten (das sanfte Abfedern der Insassen wird dort über die Druckentlastung des Prallkissens nach außen erreicht), kann bzw. muss der Treibladungssatz erfindungsgemäß folglich demgegenüber kleiner sein, so dass nicht nur das Toxizitätsproblem der erzeugten Treibgase behoben wird, sondern aufgrund optimaler Ausnutzung der Treibgase auch kleinere und folglich sowohl kostengünstigere als auch platzsparendere Gasgeneratoren zum Einsatz gelangen können und zudem die Gefahr eines Hörschadens der Insassen verringert wird. Gleichwohl lassen sich auf die erste Kammer des Prallkissens auftreffende Insassen sanft abfedern, weil der dortige Überdruck in die zweite Kammer entweichen, von dort aber nicht in den Innenraum gelangen kann.

Das Aufblasverfahren des Prallkissens, demgemäß das Treibgas zunächst in eine erste Kammer des Prallkissens überführt wird, wonach es aus der ersten Kammer in wenigstens eine zweite Kammer des Prallkissens überführt wird, die Kammern folglich sequentiell mit Gasdruck beaufschlagt werden, bietet folglich trotz des erfindungsgemäßen Umstandes, dass das gesamte Treibgas im Innern des Prallkissens zurückgehalten wird und nicht in die Umgebung verdrängt werden kann, einen besonderen Schutz der Insassen im Falle eines "Punchings", weil die zweite Kammer des Prallkissens unmittelbar zu Beginn des Überführens der beim Abbrand des Treibladungssatzes erzeugten Treibgase in die erste Kammer noch im Wesentlichen drucklos ist bzw. einen deutlich geringeren Innendruck aufweist als die erste Kammer, so dass die erste Kammer einerseits durch Entweichen der Treibgase in die zweite Kammer druckentlastet werden kann, ohne dass das Treibgas direkt aus dem gesamten Prallkissen hinausgedrückt wird, und die erste Kammer aufgrund des Vorhandenseins der wenigstens einen zweiten Kammer andererseits insbesondere ein geringeres Innenvolumen als das Gesamtvolumen herkömmlicher Prallkissen besitzen kann, so dass die Wahrscheinlichkeit, dass Insassen von der expandierenden ersten Kammer getroffen werden, insgesamt verringert wird.

Die erste Kammer des Prallkissens steht zweckmäßigerweise durch wenigstens eine, insbesondere mehrere, lokal angeordnete Durchlassöffnung(en) mit der zweiten Kammer in Verbindung, so dass das Treibgas, nachdem es die erste Kammer entfaltet hat, in die zweite Kammer zu gelangen vermag, welche dann ihrerseits ihre Wirkung entfaltet und insbesondere einem Abgleiten des Insassen entlang dem Prallkissen entgegenzuwirken vermag. Ferner wird auf diese Weise insbesondere sichergestellt, dass infolgedessen, dass das Treibgas von der ersten Kammer in die zweite Kammer gelangen kann, die erste Kammer in einem gewissen Maße druckentlastet, um einen hierauf auftreffenden Insassen möglichst sanft abzubremsen.

Die die erste Kammer mit der wenigstens einen zweiten Kammer verbindende(n) Durchlassöffnung(en) kann bzw. können hierbei vorzugsweise mit einem Überdruckventil versehen sein, welches beispielsweise derart ausgestaltet sein kann, wie es bei herkömmlichen Prallkissen der Fall ist, um das Treibgas aus dem Prallkissen abzuführen, nachdem es aufgeblasen worden ist. Dies gibt die Möglichkeit, in der ersten Kammer den erforderlichen Druck voreinzustellen, um den hierauf auftreffenden Insassen möglichst sanft abzufedern, aber zugleich ein Auftreffen desselben auf hinter dem Prallkissen befindliche Innenverkleidungsteile zuverlässig zu verhindern, wonach - sobald dieser Druck in der ersten Kammer erreicht worden ist - die Überdruckventile geöffnet werden und auch die zweite Kammer mit dem Treibgas druckbeaufschlagt und entfaltet wird.

Wie bereits angedeutet, kann gemäß einer besonders vorteilhaften Ausgestaltung vorgesehen sein, dass der Treibladungssatz des Gasgenerators derart an das Aufnahmevolumen des Prallkissens angepasst ist, dass das beim Abbrand des Treibladungssatzes erzeugte Gasvolumen kleiner ist als die Summe der Aufnahmevolumina der ersten Kammer und der wenigstens einen zweiten Kammer des Prallkissens. Folglich lässt sich nicht nur die Größe des Gasgenerators und folglich die Geräuschentwicklung beim Abbrand von dessen Treibladungssatz gegenüber dem Stand der Technik signifikant verringern, sondern ist es insbesondere möglich, dass zunächst im Wesentlichen nur die erste Kammer des Prallkissens mit dem Treibgas befüllt wird, wobei das Treibgas - oder genauer: ein Teil des in der ersten Kammer befindlichen Treibgases - hauptsächlich erst dann in die zweite Kammer verdrängt wird, wenn ein Passagier auf die erste Kammer des Prallkissens auftrifft, wodurch sich aufgrund eines solchen sequentiellen Aufblasens ein besonders sanftes Abbremsen mit relativ geringen (negativen) Beschleunigungen ergibt und infolge des Aufblasens der zweiten Kammer ein seitliches Abgleiten des Passagiers von dem Prallkissen verhindert wird, ohne dass das Treibgas in die Umgebung entweichen kann.

In diesem Zusammenhang hat es sich beispielsweise als zweckdienlich erwiesen, wenn das beim Abbrand des Treibladungssatzes des Gasgenerators erzeugte Gasvolumen maximal etwa 30%, insbesondere maximal etwa 20%, vorzugsweise maximal etwa 10%, größer ist als das Aufnahmevolumen der ersten Kammer des Prallkissens, wobei das beim Abbrand des Treibladungssatzes des Gasgenerators erzeugte Gasvolumen beispielsweise auch etwa dem Aufnahmevolumen der ersten Kammer des Prallkissens, welche mit der wenigstens einen Auslassöffnung des Gasgenerators in Verbindung steht, im Wesentlichen entsprechen kann.

In verfahrenstechnischer Hinsicht kann demgemäß vorzugsweise vorgesehen sein, dass das Treibgas so lange in der ersten Kammer des Prallkissens im Wesentlichen zurückgehalten wird, bis es - oder genauer: ein Anteil desselben - infolge einer auf die erste Kammer einwirkenden mechanischen Stoßbelastung (auch) in die wenigstens eine zweite Kammer überführt wird.

Darüber hinaus hat es sich in verfahrenstechnischer Hinsicht im Hinblick auf die oben erwähnten Funktionen des Prallkissens als vorteilhaft erwiesen, wenn die zweite Kammer des Prallkissens beim Aufblasen derselben im Wesentlichen ring- oder ringsegmentförmig um die erste Kammer herum angeordnet wird, wobei die zweite Kammer des Prallkissens insbesondere über die erste Kammer vorragend angeordnet wird.

In Bezug auf eine vorteilhafte Geometrie des Prallkissens eines erfindungsgemäßen Insassen-Rückhaltesystems kann demnach vorgesehen sein, dass sich die zweite Kammer des Prallkissens in dessen expandiertem Zustand im Wesentlichen ring- oder ringsegmentförmig um die erste Kammer herum erstreckt, wodurch die zweite Kammer insbesondere ein Abgleiten der Insassen entlang dem Prallkissen zu verhindern vermag. Die zweite Kammer kann sich dabei vorteilhafterweise etwa ringförmig - wenngleich nicht notwendigerweise kreisringförmig - um die erste Kammer herum erstrecken, wobei selbstverständlich eine einzige, etwa ring(segment)förmige zweite Kammer oder auch mehrere voneinander getrennte, jeweils ringsegmentförmige zweite Kammern vorgesehen sein können, welche insbesondere jeweils von dem Treibgas aus der ersten Kammer gespeist werden.

Darüber hinaus kann aus den oben genannten Gründen vorteilhafterweise vorgesehen sein, dass die zweite Kammer des Prallkissens - vom Gasgeneratorgehäuse in Richtung des Insassen betrachtet - in dessen expandiertem Zustand über die erste Kammer vorragt und folglich eine Art Umfangskragen bildet, damit der Insasse nicht über das Prallkissen hinaus abgleiten kann. Der geometrischen Form der ersten Kammer des Prallkissens sind dabei grundsätzlich keine Grenzen gesetzt und kann diese je nach dem zu erwartenden Aufprallbereich eines Insassen z.B. im Wesentlichen rund, drei-, vier- oder mehreckig, länglich oder dergleichen sein, wie es von bekannten Prallkissen gemäß dem Stand der Technik als solches bekannt ist.

Die zweite Kammer des Prallkissens kann dabei beispielsweise eine im Wesentlichen ring- oder ringsegmentförmige Lage aufweisen, welche an ihren entgegengesetzten Rändern mit einer die erste Kammer bildenden Lage des Prallkissens verbunden, insbesondere vernäht oder andersartig festgelegt, ist. Die zweite Kammer kann folglich zwischen einem etwa ring- oder ringsegmentförmigen Abschnitt der die erste Kammer begrenzenden Lage und der die zweiten Kammer nach außen begrenzenden ring- oder ringsegmentförmigen Lage gebildet sein, wobei die Lagen der ersten und zweiten Kammer aus demselben Material gefertigt sein können, wie beispielsweise aus mit Silikon beschichteten Polyamid- oder Polyestermaterialien. Dies erweist sich nicht nur in konstruktiver Hinsicht sowohl als sehr wirksam als auch als einfach und kostengünstig, sondern ermöglicht auch die aus dem Stand der Technik bekannte Faltungen des Prallkissens in dem Airbag-Modul, wie beispielsweise nach Art einer Leporello-Faltung, einer Raff-Faltung oder dergleichen.

Die die zweite Kammer nach außen begrenzende Lage des Prallkissens kann hierbei folglich in dessen zusammengefaltetem Zustand zumindest teilweise der die erste Kammer bildenden Lage anliegen.

Das Aufnahmevolumen der zweiten Kammer oder der zweiten Kammern des Prallkissens kann vorzugsweise zwischen etwa 20% und etwa 80%, insbesondere zwischen etwa 30% und etwa 70%, vorzugsweise zwischen etwa 40% und etwa 60%, des Aufnahmevolumens der ersten Kammer betragen, wobei das gesamte Aufnahmevolumen aller Kammern des Prallkissens weitgehend jenem bekannter Prallkissen entsprechen kann und demnach z.B. in der Größenordnung zwischen etwa 30 1 und etwa 100 1 betragen kann.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische Schnittansicht einer Ausführungsform eines erfindungsgemäßen Insassen-Rückhaltesystems mit einem Gasgenerator und einem Prallkissen im zusammengefalteten Zustand;
- Fig. 2: eine schematische Querschnittsansicht des Prallkissens des Insassen-Rückhaltesystems gemäß Fig. 1 in dessen expandierten bzw. entfalteten Zustand; und
- Fig. 3: eine schematische perspektivische Schnittansicht des expandierten Prallkissens gemäß Fig. 2.

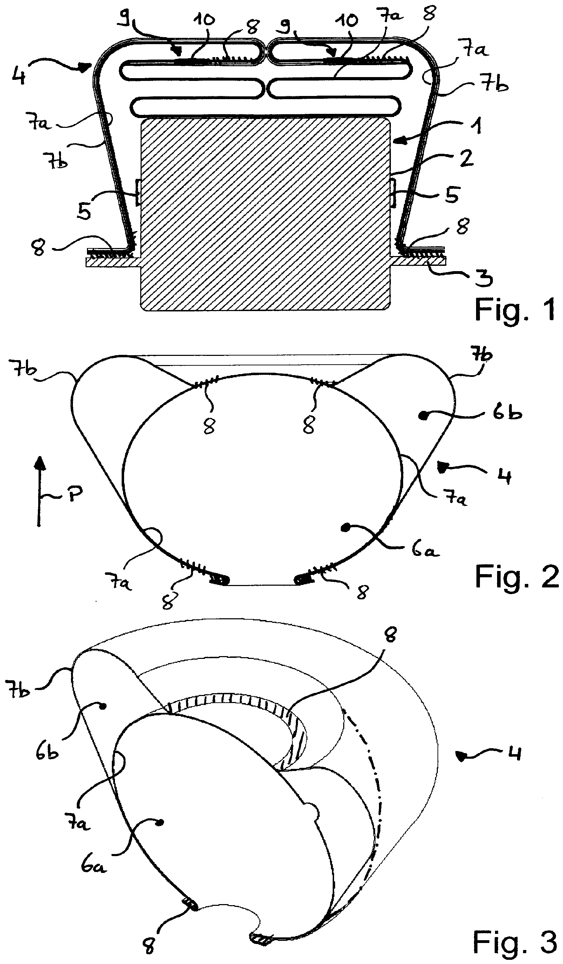

In der Fig. 1 ist eine Ausführungsform eines Airbag-Moduls eines im Übrigen nicht näher gezeigten erfindungsgemäßen Insassen-Rückhaltesystems schematisch wiedergegeben, wie es beispielsweise in Kraftfahrzeugen oder Flugzeugen zum Schutz der Insassen bei Unfällen zum Einsatz gelangen kann. Es umfasst einen Gasgenerator 1 mit einem schraffiert dargestellten Gasgeneratorgehäuse 2, in welchem ein aus dem Stand der Technik als solches bekannter Treibladungssatz (nicht gezeigt) aufgenommen ist. An dem Gasgeneratorgehäuse 2, wie beispielsweise an einem ringförmigen Befestigungsflansch 3 desselben, ist ein Prallkissen 4 festgelegt, welches z.B. aus einem mit Silikon beschichteten Polyamidgewebe gefertigt sein kann. Der Innenraum des Prallkissens 4 steht über Auslassöffnungen 5 des Gasgeneratorgehäuses 2 mit dem dort untergebrachten Treibladungssatz in Verbindung, wobei beispielsweise zwei oder mehr, z.B. um den Umfang des Gasgeneratorgehäuses 2 verteilt angeordnete Auslassöffnungen 5 vorgesehen sein können. Das Airbag-Modul umfasst darüber hinaus eine gleichfalls nicht zeichnerisch wiedergegebene Zündeinheit für den Treibladungssatz sowie gegebenenfalls eine Steuereinheit, welche mit einem oder mehreren Sensoren, wie insbesondere Beschleunigungs- und/oder Drucksensoren, zusammenzuwirken vermag, um den Treibladungssatz im Falle eines Unfalls zu zünden und die erzeugten Treibgase in das Prallkissen 4 einzuleiten. In der in der Fig. 1 dargestellten Situation befindet sich das Prallkissen 4 im - hier nach Art einer sogenannten Laparello-Faltung - gefalteten Zustand, wie es dem Zustand entspricht, in welchem das Airbag-Modul in ein Fahr- oder Flugzeug eingebaut wird.

Wie insbesondere auch den Fig. 2 und 3 zu entnehmen ist, in welchen das Prallkissen 4 gänzlich entfaltet bzw. expandiert worden ist, weist das Prallkissen 4 einerseits eine zentrale erste Kammer 6a, andererseits eine zweite Kammer 6b auf, welche sich beim vorliegenden Ausführungsbeispiel im Wesentlichen ringförmig um die erste Kammer 6a herum erstreckt und - entsprechend des Pfeils P der Fig. 2 vom Gasgeneratorgehäuse 2 in Richtung eines Insassen betrachtet - über die erste Kammer 6a vorragt und auf diese Weise eine Art Umfangsvorsprung bildet, welcher ein Abgleiten des Insassen entlang des Prallkissens 4 verhindert. Die zentrale erste Kammer 6a besitzt beim vorliegenden Ausführungsbeispiel eine etwa kugelförmige Ausgestaltung mit im Wesentlichen rundem Querschnitt, kann demgegenüber aber selbstverständlich auch andersartig ausgestaltet sein und beispielsweise aus einen etwa drei-, vier- oder mehreckigen, ovalen oder länglichen Querschnitt aufweisen.

Wie ferner sowohl aus der Fig. 1 als auch aus den Fig. 2 und 3 hervorgeht, ist die zweite Kammer 6b des Prallkissens 4 im vorliegenden Fall nach außen von einer im Wesentlichen ringförmigen Lage 7b begrenzt, welche an ihren entgegengesetzten Rändern mit einer die erste Kammer 6a bildenden Lage 7a des Prallkissens 4 verbunden ist, was bei dem gezeigten Ausführungsbeispiel durch randseitiges Vernähen der die zweite Kammer 6b bildenden Lage 7b mit der die erste Kammer 6a bildenden Lage 7a sichergestellt ist, wie es durch die strichliniert angedeuteten Verbindungsbereiche 8 angedeutet ist. Die zweite Kammer 6b erstreckt sich folglich zwischen einem ringförmigen Abschnitt der ersten Lage 7a und der ringförmigen Lage 7b, welche die zweite Kammer 6b nach außen begrenzt. Die die erste Kammer 6a bildende Lage 7a und die die zweite Kammer 6b nach außen begrenzende Lage 7b können dabei zweckmäßigerweise aus denselben Materialien gefertigt sein, wie z.B. aus den oben erwähnten Materialien, wie sie auch bei herkömmlichen Prallkissen gemäß dem Stand der Technik Einsatz finden. Aus der Fig. 1 ist in diesem Zusammenhang erkennbar, dass die die zweite Kammer 6b nach außen begrenzende Lage 7b des Prallkissens 4 in dessen zusammengefaltetem Zustand der die erste Kammer 6a bildenden Lage 7a anliegt, so dass die Lagen 7a, 7b des Prallkissens 4 in herkömmlicher Weise gefaltet werden können, wie nach Art einer in Fig. 1 gezeigten Laparello-Faltung. Beim vorliegenden Ausführungsbeispiel sind die gefalteten Lagen 7a, 7b hierbei jedoch derart angeordnet, dass ihre Oberflächenkontur etwa eine Kegelstumpf (bzw. ihr Querschnitt etwa ein Trapez) ergibt (vgl. wiederum die Fig. 1), was den sogenannten "Punching"-Effekt beim Expandieren des Prallkissens 4 weiter zu minimieren vermag.

Um ein Entweichen der beim Abbrand des Treibladungssatzes des Gasgenerators 1 entstehenden Treibgas einschließlich hierin häufig enthaltener Feinpartikel in die Umgebung zu verhindern, sind sowohl die erste Kammer 6a als auch die zweite Kammer 6b des Prallkissens 4 gegenüber der Umgebung im Wesentlichen gasdicht ausgestaltet, was durch eine entsprechende Gasdichtigkeit der die Kammern 6a, 6b bildenden ersten 7a und zweiten Lage 7b des Prallkissens 4 sichergestellt ist. Der Treibladungssatz ist zu diesem Zweck hinsichtlich der bei seinem Abbrand erzeugten Gasmenge an das Aufnahmevolumen des Prallkissens 4 angepasst und kann folglich gegenüber dem Stand der Technik relativ klein ausgebildet sein, weil nur die zum Befüllen des Prallkissens 4 unter dem notwendigen Innendruck erforderliche Gasmenge erzeugt werden muss. Genauer kann beispielsweise das Aufnahmevolumen des Prallkissens 4 insgesamt im Wesentlichen dem Aufnahmevolumen herkömmlicher Prallkissen entsprechen, wobei beim vorliegenden Ausführungsbeispiel das Aufnahmevolumen der zweiten Kammer 6b etwa der Hälfte des Aufnahmevolumens der ersten Kammer 6a beträgt und beispielsweise zwischen etwa 15 1 bis etwa 30 1 - hier z.B. etwa 20 1 - betragen kann, während das Aufnahmevolumen der ersten Kammer 6a beispielsweise etwa 30 1 bis etwa 60 1 - hier z.B. etwa 40 1 - betragen kann. Das Aufnahmevolumen des Prallkissens 4 ist dabei derart an den (nicht gezeigten) Treibladungssatz des Gasgenerators 1 angepasst, dass das beim Abbrand des Treibladungssatzes erzeugte Gasvolumen kleiner ist als die Summe der Aufnahmevolumina der ersten Kammer 6a und der zweiten Kammer 6b des Prallkissens 4, wobei das beim Abbrand des Treibladungssatzes erzeugte Gasvolumen beispielsweise etwa dem Aufnahmevolumen der ersten Kammer 6a entspricht oder dieses geringfügig, vorzugsweise bis maximal etwa 30%, übertrifft.

Zum Zwecke eines sequenziellen Expandierens zunächst der zentralen ersten Kammer 6a und sodann der etwa ringförmigen zweiten Kammer 6b des Prallkissens 4 steht nur die erste Kammer 6a mit den Auslassöffnungen 4 des Gasgeneratorgehäuses 2 in Verbindung (vgl. die Fig. 1), während die zweite Kammer 6b des Prallkissens 4 durch mehrere, z.B. lokal angeordnete und sich um einen Umfangsabschnitt innerhalb eines der Verbindungsbereiche 8 erstreckenden Durchlassöffnungen 9 (vgl. wiederum die Fig. 1) mit der ersten Kammer 6a in Verbindung steht. Die Durchlassöffnungen 10 können dabei insbesondere mit Überdruckventilen 10 ausgestattet sein, welche beispielsweise nach Art von bekannten Überdruckventilen ausgestaltet sein können, wie sie bei herkömmlichen Prallkissen zum Ableiten der Treibgase aus dem Prallkissen in die Umgebung Verwendung finden. Auf diese Weise kann in der ersten Kammer 6a der erforderliche Innendruck voreingestellt werden, um den hierauf auftreffenden Insassen möglichst sanft abzufedern, wonach - sobald dieser Druck in der ersten Kammer 6a erreicht worden ist - die Überdruckventile 10 öffnen und auch die zweite Kammer 6b mit dem Treibgas druckbeaufschlagt und entfaltet wird.

## Patentansprüche

1. Insassen-Rückhaltesystem, umfassend einen Gasgenerator (1) mit einem in einem Gasgeneratorgehäuse (2) angeordneten Treibladungssatz und ein mit wenigstens einer Auslassöffnung (5) des Gasgeneratorgehäuses (2) in Verbindung stehendes Prallkissen (4), wobei das Prallkissen (4) eine erste Kammer (6a) und wenigstens eine zweite Kammer (6b) aufweist, wobei die erste Kammer (6a) mit der zweiten Kammer (6b) in Verbindung steht und nur die erste Kammer (6a) des Prallkissens (4) mit der wenigstens einen Auslassöffnung (5) des Gasgeneratorgehäuses (2) in Verbindung steht, **dadurch gekennzeichnet, dass** sowohl die erste Kammer (6a) als auch die wenigstens eine zweite Kammer (6b) des Prallkissens (4) gegenüber der Umgebung im Wesentlichen gasdicht ausgestaltet sind.

2. Insassen-Rückhaltesystem nach Anspruch 1, **dadurch gekennzeichnet, dass** die erste Kammer (6a) des Prallkissens (4) durch wenigstens eine, insbesondere mehrere, lokal angeordnete Durchlassöffnung(en) (9) mit der zweiten Kammer (6b) in Verbindung steht.

3. Insassen-Rückhaltesystem nach Anspruch 2, **dadurch gekennzeichnet, dass** die Durchlassöffnung(en) (9) mit einem Überdruckventil (10) versehen ist bzw. sind.

4. Insassen-Rückhaltesystem nach einem der Ansprüche 1 bis 3, **dadurch gekennzeichnet, dass** der Treibladungssatz des Gasgenerators (1) derart an das Aufnahmevolumen des Prallkissens (4) angepasst ist, dass das beim Abbrand des Treibladungssatzes erzeugte Gasvolumen kleiner ist als die Summe der Aufnahmevolumina der ersten Kammer (6a) und der wenigstens einen zweiten Kammer (6b) des Prallkissens (4).

5. Insassen-Rückhaltesystem nach einem der Ansprüche 1 bis 4, **dadurch gekennzeichnet, dass** das beim Abbrand des Treibladungssatzes des Gasgenerators (1) erzeugte Gasvolumen maximal 30%, insbesondere maximal 20%, vorzugsweise maximal 10%, größer ist als das Aufnahmevolumen der ersten Kammer (6a) des Prallkissens (4).

6. Insassen-Rückhaltesystem nach einem der Ansprüche 1 bis 5, **dadurch gekennzeichnet, dass** sich die zweite Kammer (6b) des Prallkissens (4) in dessen expandiertem Zustand im Wesentlichen ring- oder ringsegmentförmig um die erste Kammer (6a) herum erstreckt.

7. Insassen-Rückhaltesystem nach einem der Ansprüche 1 bis 6, **dadurch gekennzeichnet, dass** die zweite Kammer (6b) des Prallkissens (4) in dessen expandiertem Zustand über die erste Kammer (6a) vorragt.

8. Insassen-Rückhaltesystem nach einem der Ansprüche 1 bis 7, **dadurch gekennzeichnet, dass** die zweite Kammer (6b) des Prallkissens (4) eine im Wesentlichen ring- oder ringsegmentförmige Lage (7b) aufweist, welche an ihren entgegengesetzten Rändern mit einer die erste Kammer (6a) bildenden Lage (7a) des Prallkissens (4) verbunden, insbesondere vernäht, ist.

9. Insassen-Rückhaltesystem nach einem der Ansprüche 1 bis 8, **dadurch gekennzeichnet, dass** die die zweite Kammer (6b) nach außen begrenzende Lage (7b) des Prallkissens (4) in dessen zusammengefaltetem Zustand zumindest teilweise der die erste Kammer (6a) bildenden Lage (7a) anliegt.

10. Insassen-Rückhaltesystem nach einem der Ansprüche 1 bis 9, **dadurch gekennzeichnet, dass** das Aufnahmevolumen der zweiten Kammer (6b) des Prallkissens (4) zwischen 20% und 80%, insbesondere zwischen 30% und 70%, des Aufnahmevolumens der ersten Kammer (6a) beträgt.

11. Prallkissen (4) für ein Insassen-Rückhaltesystem, welches einen Gasgenerator (1) mit einem in einem Gasgeneratorgehäuse (2) angeordneten Treibladungssatz umfasst, wobei das Prallkissen (4) zur Anordnung an dem Gasgeneratorgehäuse (2) derart ausgebildet ist, dass es mit wenigstens einer Auslassöffnung (5) des Gasgeneratorgehäuses (2) in Verbindung steht, wobei das Prallkissen (4) eine erste Kammer (6a) und wenigstens eine zweite Kammer (6b) aufweist, wobei die erste Kammer (6a) mit der zweiten Kammer (6b) in Verbindung steht und nur die erste Kammer (6a) des Prallkissens (4) mit der wenigstens einen Auslassöffnung (5) des Gasgeneratorgehäuses (2) in Verbindung steht, **dadurch gekennzeichnet, dass** sowohl die erste Kammer (6a) als auch die wenigstens eine zweite Kammer (6b) des Prallkissens (4) gegenüber der Umgebung im Wesentlichen gasdicht ausgestaltet sind.

12. Prallkissen nach Anspruch 11, **dadurch gekennzeichnet, dass** es die kennzeichnenden Merkmale wenigstens eines der Ansprüche 2 bis 10 aufweist.

13. Verfahren zum Aufblasen eines Prallkissens (4) eines Insassen-Rückhaltesystems mit einem Gasgenerator (1) mit einem in einem Gasgeneratorgehäuse (2) angeordneten Treibladungssatz, insbesondere nach einem der Ansprüche 1 bis 10, indem der Treibladungssatz gezündet und das dadurch erzeugte Treibgas über wenigstens eine Auslassöffnung (5) des Gasgeneratorgehäuses (2) in das Prallkissen (4) überführt wird, um das Prallkissen (4) zu expandieren, wobei das Treibgas zunächst nur in eine erste Kammer (6a) des Prallkissens (4) überführt wird, wonach es aus der ersten Kammer (6a) in wenigstens eine hiermit in Verbindung stehende zweite Kammer (6b) des Prallkissens (4) überführt wird, **dadurch gekennzeichnet, dass** das Treibgas im Innern des Prallkissens (4) zurückgehalten wird.

14. Verfahren nach Anspruch 13, **dadurch gekennzeichnet, dass** das Treibgas so lange in der ersten Kammer (6a) des Prallkissens (4) im Wesentlichen zurückgehalten wird, bis es infolge einer auf die erste Kammer (6a) einwirkenden mechanischen Stoßbelastung in die wenigstens eine zweite Kammer (6b) überführt wird.

15. Verfahren nach Anspruch 13 oder 14, **dadurch gekennzeichnet, dass** die zweite Kammer (6b) des Prallkissens (4) beim Aufblasen desselbens im Wesentlichen ring- oder ringsegmentförmig um die erste Kammer (6a) herum angeordnet wird, wobei die zweite Kammer (6b) des Prallkissens (4) insbesondere über die erste Kammer (6a) vorragend angeordnet wird.
